# EUROPEAN PATENT SPECIFICATION

(11) **EP 4 318 771 B1**
(45) Date of publication and mention of the grant of the patent: **25.06.2025**
(21) Application number: 22883882.7
(22) Date of filing: 13.10.2022
(51) Int. Cl.: H01M 50/367, H01M 50/35, H01M 50/30, H01M 50/578, H01M 50/105, H01M 50/178, H01M 50/588, H01M 50/59, H01M 50/342

(54) **GAS VENTING INDUCTION BLOCK AND POUCH-TYPE SECONDARY BATTERY INCLUDING THE SAME**
BLOCK ZUR INDUKTION DER GASENTLÜFTUNG UND BEUTELARTIGE SEKUNDÄRBATTERIE DAMIT
BLOC PERMETTANT L'ÉVACUATION DE GAZ ET BATTERIE SECONDAIRE DE TYPE POCHE L'INCLUANT

(30) Priority: 22.10.2021 KR 20210142201
(43) Date of publication of application: 07.02.2024
(73) Proprietor: LG ENERGY SOLUTION, LTD., Seoul 07335 (KR)
(72) Inventor: MIN, Kyoung-Choon, Daejeon 34122 (KR)
(74) Representative: Plasseraud IP
(86) International application number: PCT/KR2022/015527
(87) International publication number: WO 2023/068659

(56) References cited:
- JP-A- 2010 186 786
- JP-A- 2010 186 786
- JP-A- H0 950 799
- KR-A- 20120 136 750
- KR-A- 20150 023 114
- KR-A- 20150 023 114
- KR-A- 20160 075 468
- US-A1- 2011 129 702

## Description

### TECHNICAL FIELD

The present disclosure relates to a pouch-type secondary battery, and a device for discharging internal gas in a specific direction during swelling of the pouch-type secondary battery.

The present application claims priority to Korean Patent Application No. 10-2021-0142201 filed on October 22, 2021 in the Republic of Korea.

### BACKGROUND ART

In general, a secondary battery means a battery capable of charge/discharge, unlike a primary battery that may not be charged, and is widely used in electronic devices such as mobile phones, laptop computers, camcorders, and the like, or electric vehicles. In particular, since a lithium secondary battery has a larger capacity than a nickel-cadmium battery or a nickel-hydrogen battery, which is widely used as a power source for electronic equipment, and has a high energy density per unit weight, the degree of utilization thereof is rapidly increasing.

When a secondary battery is overcharged or a sudden change occurs in the electrical environment, an electrolyte may be decomposed at the positive electrode and lithium metal may be deposited at the negative electrode, and in the case of occurrence of such phenomenon, the performance of the secondary battery may be downgraded. In addition, a secondary battery uses, for example, a solvent such as ethylene carbonate or propylene carbonate as an electrolyte, but these solvents are decomposed at a high temperature to generate gas, and thus it causes an increase in pressure, whereby a swelling phenomenon that is a kind of inflating phenomenon may occur, resulting in serious problems such as explosion of the secondary battery.

Accordingly, the present applicant is seeking a method of removing the risk factor of the secondary battery by inducing gas venting in a specific direction before the internal pressure of the secondary battery increases to reach an explosion risk stage.

For example, Korean Patent Publication No. KR 10-2018-0075797 discloses a cylindrical secondary battery in which an electrode assembly and an electrolyte are placed in a metal can and sealed with a top cap, and a gas hole is applied to the top cap. When a thermal runaway situation occurs, the cylindrical secondary battery is configured such that gas inside the metal can is discharged to the outside through the gas hole of the top cap so as not to increase the internal pressure.

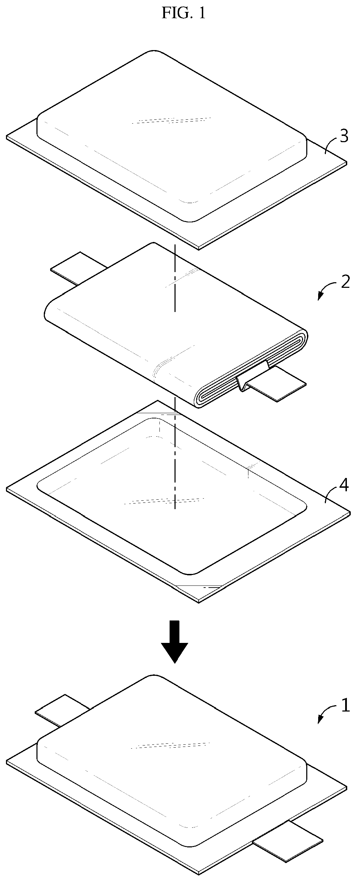

However, the pouch-type secondary battery 1 may not structurally apply a gas hole as in a cylindrical or prismatic secondary battery, and as shown in FIG. 1, it is formed of a structure in which the electrode assembly 2 is disposed between the upper pouch sheet 3 and the lower pouch sheet 4 and then four edges of the upper and lower pouch sheets 3, 4 are thermally fused to be sealed, whereby it is not easy to induce gas venting in a specific direction. Accordingly, it is required to develop a gas venting means suitable for a pouch-type secondary battery.

The document KR20150023114A relates to a battery pack having gas discharge pipe.

The document JP2010186786A relates to an electrical storage device and electrical storage device module.

The document US2011129702A1 relates to a secondary battery and battery pack using the same.

### DISCLOSURE

### Technical Problem

The present disclosure is designed to solve the problems of the related art, and therefore the present disclosure is directed to reducing a risk factor by venting gas in a specific direction during swelling of a pouch-type secondary battery.

Other objects and advantages of the present disclosure will be described below, and will be learned by embodiments of the present disclosure. In addition, the objects and advantages of the present invention is realized by configurations and a combination of configurations falling within the scope of the appended claims.

### Technical Solution

According to the present invention, there is provided a gas venting induction block according to claim 1 including a block body having a slit to allow the cell terrace of a pouch-type secondary battery to be inserted to a predetermined depth; a pocket portion provided inside the block body and provided to accommodate a portion of the cell terrace in a form in which a space is expanded larger than the slit; and an exhaust pipe provided in a tubular shape and extending from the pocket portion to the outer surface of the block body, wherein the exhaust pipe includes a needle portion protruding sharply toward the inner space of the pocket portion so as to perforate the cell terrace when the cell terrace expands beyond a certain volume in the pocket portion.

The block body may include a block upper portion and a block lower portion spaced apart vertically with the slit therebetween; and a block front portion having no slit and connected to the block upper portion and the block lower portion.

The block upper portion and the block lower portion may be vertically symmetrical, and the thickness of the middle region may be configured to be thinner than the thickness of both edge regions so that the pocket portion is provided.

One end of the exhaust pipe corresponding to the needle portion may be located in the pocket portion and the other end of the exhaust pipe may be exposed to the outside of the block front portion via the inside of the block front portion.

The exhaust pipe is plural and may include an upper exhaust pipe having the needle portion protruding from the block upper portion toward the pocket portion; and a lower exhaust pipe having the needle portion protruding from the block lower portion toward the pocket portion.

The gas venting induction block may include a cell lead outlet having a size corresponding to the width and thickness of the electrode lead of the pouch-type secondary battery and provided to penetrate the block front portion to communicate with the pocket portion.

The gas venting induction block may include two foam members disposed in the pocket portion and spaced apart vertically with the slit therebetween.

The needle portion may be configured to be positioned within the foam member.

According to another aspect, there may be provided a pouch-type secondary battery including the above-described gas venting induction block.

According to still another aspect, there may be provided a battery module including the above-described pouch-type secondary batteries.

### Advantageous Effects

The gas venting induction block according to claim 1 is capable of suppressing an increase in internal pressure of the secondary battery by venting gas during swelling of the pouch-type secondary battery. In particular, internal gas may be ejected in a specific direction through the gas venting induction block during swelling of the secondary battery, thereby reducing a risk factor due to gas venting.

Advantageous effects to be obtained by the present disclosure are not limited to the above-described effects, and other effects not mentioned herein may be clearly understood by those skilled in the art from the following description of the present disclosure.

### DESCRIPTION OF DRAWINGS

FIG. 1 is a view schematically illustrating the configuration of a pouch-type secondary battery according to the prior art.
FIG. 2 is a plan view of a pouch-type secondary battery according to an embodiment of the present disclosure.
FIG. 3 is a perspective view illustrating a portion of a pouch-type secondary battery according to an embodiment of the present disclosure.
FIG. 4 (a) is a perspective view of a gas venting induction block according to an embodiment of the present disclosure, and FIG. 4 (b) is a partially cut-away perspective view of the gas venting induction block.
FIG. 5 is a front view of the gas venting induction block of FIG. 4 (a).
FIG. 6 is a rear view of the gas venting induction block of FIG. 4 (a).
FIG. 7 is a side view of the gas venting induction block of FIG. 4 (a).
FIG. 8 is a cross-sectional view of the gas venting induction block region when a pouch-type secondary battery of the present disclosure is in normal.
FIG. 9 is a cross-sectional view of the gas venting induction block region when a pouch-type secondary battery of the present disclosure is swelling.
FIG. 10 is a view illustrating a portion of a battery module according to an embodiment of the present disclosure.

### BEST MODE

Hereinafter, preferred embodiments of the present disclosure will be described in detail with reference to the accompanying drawings. Prior to the description, the shapes and sizes of components in the drawings may be exaggerated, omitted, or schematically illustrated for clearer description. Accordingly, the size or proportion of each component does not fully reflect the actual size or proportion.

Therefore, the description proposed herein is just a preferable example for the purpose of illustrations only, not intended to limit the scope of the present disclosure, so it should be understood that other equivalents and modifications could be made thereto without departing from the scope of the appended claims.

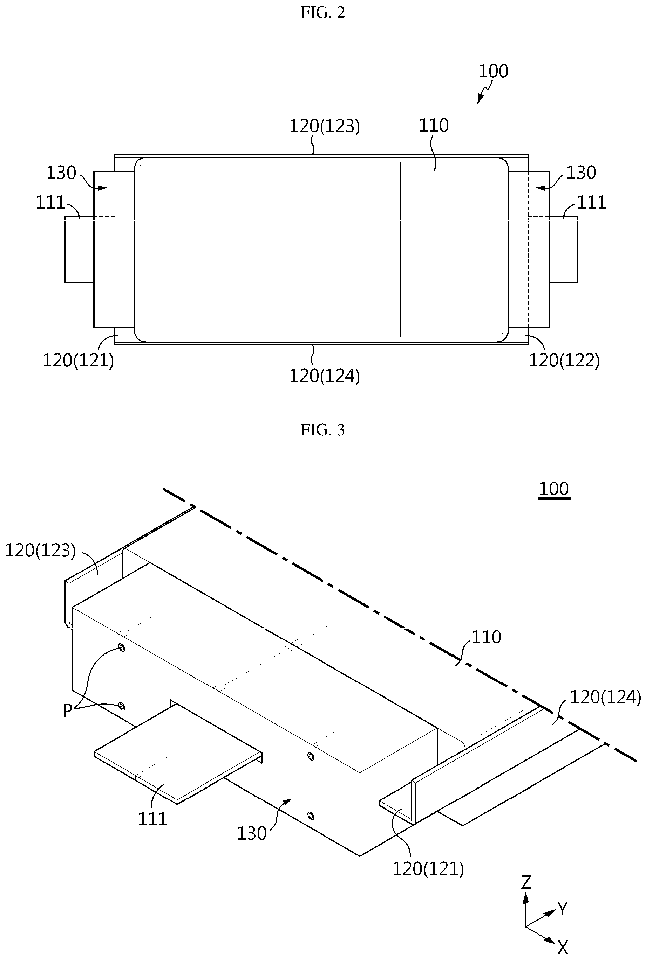

FIG. 2 is a plan view of a pouch-type secondary battery according to an embodiment of the present disclosure, and FIG. 3 is a perspective view illustrating a portion of a pouch-type secondary battery according to an embodiment of the present disclosure.

The pouch-type secondary battery 100 according to an embodiment of the present disclosure may be configured to include an electrode assembly, an electrode lead 111, a pouch case, and a gas venting induction block 130.

The electrode assembly may include a positive electrode plate, a negative electrode plate, and a separator. The positive electrode plate may be formed by applying a positive electrode active material to a current collector plate made of aluminum (Al), and the negative electrode plate may be formed by applying a negative electrode active material to a current collector plate made of copper (Cu). The electrode assembly may be provided in a stack type formed by interposing a separator between the positive electrode plate and the negative electrode plate, or a jelly-roll type in which one positive electrode plate and one negative electrode plate are wound with a separator interposed therebetween. Of course, the scope of the present disclosure should not be limited thereto. For example, the electrode assembly may be provided in a stack-and-folding type in which a stack type and a jelly-roll type are mixed.

The electrode lead 111 is a portion that is connected to the electrode assembly and extends to the outside of the pouch case, and may function as an electrode terminal capable of being electrically connected to other secondary batteries or external devices. The electrode lead 111 includes a positive electrode lead connected to the positive electrode plate and a negative electrode lead connected to the negative electrode plate, and the positive electrode lead and the negative electrode lead may be positioned in different directions as in the present embodiment or attached to the electrode assembly to be positioned in the same direction unlike the present embodiment.

The pouch case may form a sealed space capable of accommodating and protecting the electrode assembly, the electrolyte, and the like, and may perform a heat dissipation function.

Although not shown in detail for convenience of drawings, the pouch case may be composed of an upper pouch sheet and a lower pouch sheet in the form of two laminate sheets. The upper and lower pouch sheets may include an outer insulating layer and an inner adhesive layer made of a polymer material, and a metal layer interposed between the outer insulating layer and the inner adhesive layer. Here, aluminum (Al) may be used as a material for the metal layer.

At least one of the upper pouch sheet and the lower pouch sheet may be provided to have a concavely formed space to accommodate the electrode assembly. For example, the electrode assembly may be disposed in a formed space of the lower pouch sheet, and the upper pouch sheet may be overlapped on the lower pouch sheet. In addition, a sealing portion 120 may be formed along the edge lines of the four sides of the upper and lower pouch sheets. Here, the sealing portion 120 may be defined as a portion in which the upper and lower pouch sheets are sealed by thermal fusion or the like.

Hereinafter, the portions of the sealing portion 120 where the electrode leads 111 protrude will be defined as cell terraces 121, 122, and the portions without the electrode leads 111 will be defined as side wings 123, 124. That is, in the pouch case, the sealing portion 120 on the short side corresponds to the cell terrace 121 and the sealing portion 120 on the long side corresponds to the side wings 123, 124. In addition, the portion surrounding the electrode assembly as an inner region based on the sealing portion 120 will be defined as the electrode accommodating portion 110. Folding the side wings 123, 124 and adhering to the side surface of the electrode accommodating portion may be advantageous in reducing the width of the secondary battery.

The gas venting induction block 130 is a component that serves to reduce risk factors by making a hole in the expanded sealing portion 120 and allowing gas to be ejected in a specific direction when the pressure increases to reach a dangerous level due to gas generation of the pouch-type secondary battery 100.

Hereinafter, the configuration of the gas venting induction block 130 will be described in detail with reference to FIGS. 3 to 7.

The gas venting induction block 130 according to an embodiment of the present disclosure includes a block body 131, a pocket portion 132, an exhaust pipe 133, and two foam members 135, 136.

As shown in FIG. 3, the gas venting induction block 130 may be configured such that the electrode lead 111 passes through the block body 131 and the cell terrace 121 is inserted into the block body 131 to a predetermined depth.

In general, in the case of the pouch-type secondary battery 100, when the internal pressure increases, the sealing of the cell terraces 121, 122 in which the electrode leads 111 are located is destroyed rather than the side wings 123, 124, and thus the corresponding area tends to swell. For this reason, in order to actively discharge gas from the cell terraces 121, 122 to the outside in an emergency, the present embodiment is configured to allow the gas venting induction block 130 to be inserted into the cell terrace 121 based on the electrode lead 111. Of course, unlike the present embodiment, the gas venting induction block 130 may be inserted into the side wings 123, 124 of the pouch-type secondary battery 100, and in this case, the cell lead outlet O for withdrawing the electrode lead 111 may be omitted. A detailed description of the cell lead outlet O will be described later.

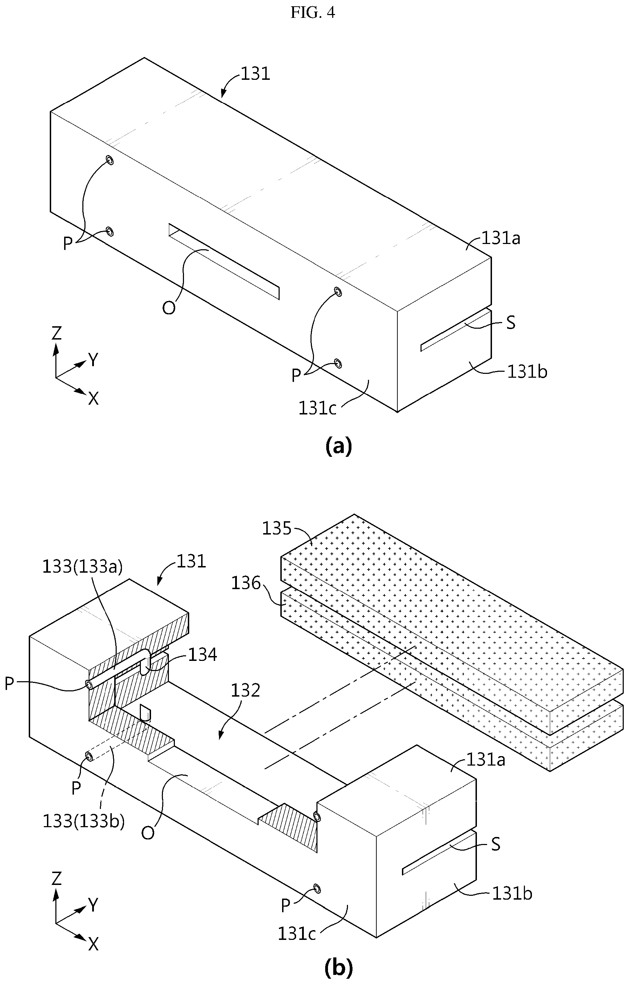

Specifically, the block body 131 constituting the gas venting induction block 130 is made of an insulating material such as plastic, and may be provided in a substantially rectangular parallelepiped shape as shown in FIG. 4. Of course, the material of the block body 131 need not be necessarily limited to plastic. For example, the block body 131 may be made of ceramic or the like as an insulating material.

The thickness (Z-axis direction) of the block body 131 may correspond to the thickness of the pouch-type battery cell, the left-right length (±X-axis direction) of the block body 131 may be shorter than the length from one end to the other end of the cell terrace 121, and the front-rear length of the block body 131 may be longer than the protruding length (-Y-axis direction) of the cell terrace 121 and shorter than the protruding length of the electrode lead 111.

The block body 131 includes a slit S formed in a direction crossing the thickness direction so that the cell terrace 121 may be inserted into the inside. The slit S is formed by the protruding length of the cell terrace 121 from the rear of the block body 131 toward the front. By such a slit S, the block body 131 may be provided in a form in which the rear portion is bisected up and down.

Accordingly, the block body 131 includes a block upper portion 131a and a block lower portion 131b spaced vertically with the slit S therebetween, and a block front portion 131c connecting the block upper portion 131a and the block lower portion 131b as a portion without the slit S and having the cell lead outlet O through which the electrode lead 111 may be withdrawn.

The pocket portion 132 is a portion provided to have a space expanded larger than the slit S inside the block body 131 so that the cell terrace 121 may expand inside the block body 131 when gas is generated in the pouch-type secondary battery 100.

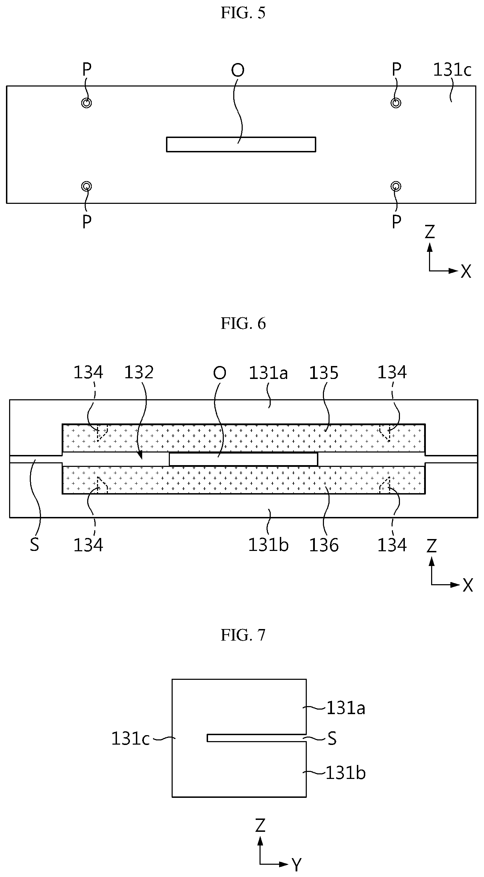

For example, referring to FIGS. 4 and 6, since the block upper portion 131a and the block lower portion 131b are vertically symmetrical and the thickness of the middle region is smaller than the thickness of both edge regions, the pocket portion 132 expanded larger than the slit S may be provided between the block upper portion 131a and the block lower portion 131b.

The cell lead outlet O may be provided penetrating the block front portion 131c in a size corresponding to the width and thickness of the electrode lead 111 as shown in FIG. 4 (a) and may be provided to communicate with the pocket portion 132 (in the Y-axis direction) inside the block body 131 as shown in FIG. 4 (b).

According to the above configuration, as shown in FIG. 3, the cell terrace 121 may be inserted into a portion where the slit S is formed in the block body 131, that is, between the block upper portion 131a and the block lower portion 131b, and the electrode lead 111 may be withdrawn to the outside of the block front portion 131c through the cell lead outlet O. A portion of the cell terrace 121 may be accommodated in the pocket portion 132 and the remaining portion may be exposed to the outside of both side surfaces of the block body 131. In addition, both edge portions of the cell terrace 121 may be folded together with the side wings 123, 124 to be in close contact with the side surface of the electrode accommodating portion 110.

As described above, the exhaust pipe 133 may be provided in a tubular shape as a component for making a hole in the cell terrace 121 when the cell terrace 121 accommodated in the pocket portion 132 expands and directing the gas ejected from the cell terrace 121 in a specific direction, and may be configured to extend from the pocket portion 132 to the outer surface of the block body 131.

For example, as shown in FIG. 4 (a), the exhaust pipe 133 may be configured such that one end is located in the pocket portion 132 and the other end P is exposed to the outside of the block front portion 131c via the inside of the block front portion 131c.

In addition, the exhaust pipe 133 may include a needle portion 134 protruding sharply toward the inner space of the pocket portion 132 so that the cell terrace 121 may be perforated when the cell terrace 121 expands beyond a certain volume in the pocket portion 132.

The gas venting induction block 130 of the present embodiment has a plurality of exhaust pipes 133, and the plurality of exhaust pipes 133 include two upper exhaust pipes 133a having needle portions 134 protruding downward from the block upper portion 131a toward the pocket portion 132 and two lower exhaust pipes 133b having needle portions 134 protruding upward from the block lower portion 131b toward the pocket portion 132.

The two upper exhaust pipes 133a may be configured to be provided one by one in the left-right direction (±X-axis direction) based on the cell lead outlet O and to be exposed to the outside of the block front portion 131c via the inside of the block upper portion 131a and the block front portion 131c, respectively. In addition, the two lower exhaust pipes 133b may be configured to be provided one by one in the left-right direction (±X-axis direction) based on the cell lead outlet O and to be exposed to the outside of the block front portion 131c via the inside of the block lower portion 131b and the block front portion 131c, respectively.

The above-described exhaust pipe 133 may be made of a metal material such as stainless and may be integrally manufactured with the block body 131 by an insert injection molding method. However, the scope of the present disclosure is not limited to the material of the exhaust pipe 133 or the manufacturing method. For example, the exhaust pipe 133 may be made of the same material as the block body 131 and may be injection molded in a form integrated with the block body 131.

Meanwhile, the gas venting induction block 130 according to the present embodiment may further include two form members disposed in the pocket portion 132 and vertically spaced apart with the slit S therebetween.

When the electrode lead 111 and the cell terrace 121 are inserted into the block body 131, the electrode lead 111 or the cell terrace 121 may be in contact with the needle portion 134 to be damaged. The two foam members 135, 136 are components for preventing the electrode lead 111 or the cell terrace 121 from being damaged unexpectedly in this way.

The two foam members 135, 136 may be made of an elastic material such as sponge or memory foam, and as shown in FIG. 6, with the slit S interposed therebetween in the pocket portion 132, one may be attached to the inner surface of block upper portion 131a and the other may be attached to the inner surface of the block lower portion 131b.

For example, after pushing the foam members 135, 136 into the pocket portion 132 (in the Y-axis direction) in a compressed state, the foam members 135, 136 are adhered in an upward direction (+Z-axis direction) toward the inner surface of the block upper portion 131a or in a downward direction (-Z-axis direction) toward the inner surface of the block lower portion 131b so that the needle portion 134 is inserted into the foam members 135, 136. Thereafter, compression of the foam members 135, 136 is released so that the foam members 135, 136 are restored to their original volume. In this case, since the needle portions 134 are embedded in the foam members 135, 136, the foam members 135, 136 may be held in contact with the inner surface of the block upper portion 131a or the inner surface of the block lower portion 131b. Here, the vertical distance between the two foam members 135 and 136 is at least greater than the slit S, and the needle portion 134 may be configured to be positioned in a state of being embedded in the foam members 135, 136.

Therefore, in the process of pushing the electrode lead 111 and the cell terrace 121 into the pocket portion 132, there is no fear of damage to the electrode lead 111 or the cell terrace 121. In this way, when gas is generated in the pouch-type secondary battery 100 in a state where the cell terrace 121 is positioned in the pocket portion 132 and the cell terrace 121 expands, the foam members 135, 136 may be compressed by pressure. Furthermore, when the cell terrace 121 reaches a state expanded above a certain volume, a hole may be made by the needle portion 134.

As the foam members 135, 136, foam members 135, 136 having different degrees of compressibility, such as ethylene vinyl acetate (EVA) foam, synthetic latex, polystyrene foam (Styrofoam), sponge, and the like may be selectively used. For example, by changing the material of the foam members 135, 136 as described above, the needle portion 134 and the cell terrace 121 may contact each other only when the expansion force of the cell terrace 121 is higher than a certain level, and thus gas may be discharged.

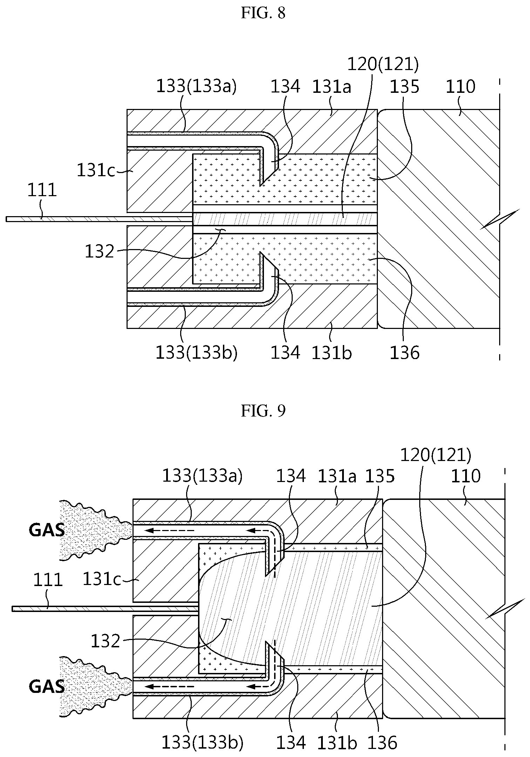

FIG. 8 is a cross-sectional view of the gas venting induction block 130 region when a pouch-type secondary battery 100 of the present disclosure is in normal, and FIG. 9 is a cross-sectional view of the gas venting induction block 130 region when a pouch-type secondary battery 100 of the present disclosure is swelling.

Referring to FIGS. 8 and 9, a gas discharge mechanism of the pouch-type secondary battery 100 by the gas venting induction block 130 will be briefly described as follows.

As shown in FIG. 8, the electrode lead 111 passes through the gas venting induction block 130 and is withdrawn in the -Y-axis direction, and the cell terrace 121 may be inserted into the gas venting induction block 130 so that a portion thereof is accommodated in the pocket portion 132 of the block body 131. Normally, the cell terrace 121 is spaced apart from the needle portion 134 by a predetermined distance and is blocked by the two foam members 135, 136 in the vertical direction even if it moves somewhat due to external shock or vibration, so it is not in contact with the needle portion 134.

However, when the internal pressure of the pouch-type secondary battery 100 increases due to gas generation, the cell terrace 121 may swell and the foam members 135, 136 may be compressed. Furthermore, when the expansion of the cell terrace 121 intensifies and the degree of expansion reaches a certain volume or more, the needle portion 134 of the exhaust pipe 133 may make a hole in the cell terrace 121 and be inserted into the cell terrace 121 as shown in FIG. 9. As a result, the gas in the cell terrace 121 may flow into the inside of the needle portion 134 and move along the inside of the exhaust pipe 133 to be ejected to the outside of the block front portion 131c.

According to this configuration of the present embodiment, when gas is generated in the pouch-type secondary battery 100 due to a situation such as thermal runaway, the internal pressure may be lowered by discharging the gas to the outside before the secondary battery reaches an explosion stage due to an increase in internal pressure, thereby preventing the secondary battery from exploding.

In addition, when gas is generated, the sealing portion 120 of the pouch case is damaged in an unspecified manner, thereby preventing the gas from being ejected in an unspecified direction. That is, in the present embodiment, since gas is discharged in a specific direction by the gas venting induction block 130, the gas discharge location may be fully expected, thereby reducing risk factors due to gas discharge.

For example, as in this embodiment, by ejecting gas in the direction of the electrode lead 111 of the pouch-type secondary battery 100, it may be easy to collect the gas ejected from each pouch-type secondary battery 100 when manufacturing the battery module, and the application of an exhaust system configuration for safely discharging the collected gas to the outside may be facilitated.

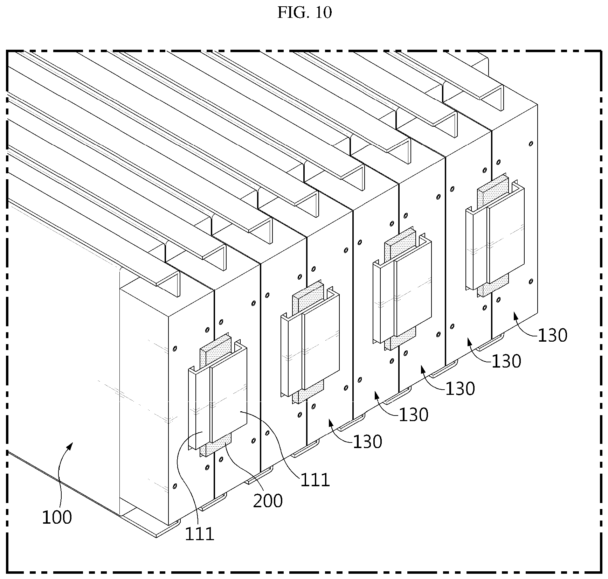

Next, with reference to FIG. 10, a battery module according to an embodiment of the present disclosure including the above-described pouch-type secondary batteries 100 will be briefly described.

FIG. 10 is a view illustrating a portion of a battery module according to an embodiment of the present disclosure.

The battery module according to an embodiment of the present disclosure shown in FIG. 10 may be configured in a form in which the above-described pouch-type secondary batteries 100 are vertically erected and stacked in the left-right direction. In the case of a battery module composed of pouch-type secondary batteries according to the prior art, a plurality of bus bars made of metal materials such as copper are used as a component for electrically connecting the pouch-type secondary batteries, and a bus bar frame in the form of a plate body is included to support the plurality of bus bars. However, the battery module according to the present disclosure may be configured to omit the bus bar frame, assemble the gas venting induction blocks 130 of the pouch-type secondary battery 100 in one direction in an adhesive or snap-fit coupling method, and mount the bus bars 200 on the block front portion 131c of the gas venting induction block 130.

For example, although not shown in the above-described embodiment, when a region of the block front portion 131c of each gas venting induction block 130 is processed and two gas venting induction blocks 130 are combined as shown in FIG. 10, the gas venting induction block 130 may be configured to form a bus bar groove in which one bus bar 200 may be partially inserted and fixed. In this case, the pouch-type secondary batteries 100 may be electrically connected by bending and welding the positive electrode lead of one pouch-type secondary battery 100 and the negative electrode lead of the other pouch-type secondary battery 100 on one bus bar attached across the two gas venting induction blocks 130.

Although not shown, the battery module of the present disclosure may be configured to safely discharge gas generated in the secondary batteries out of the battery module by adding holes through which gas is discharged from the gas venting induction blocks 130, that is, a gas pipe (not shown) that may be connected to the other ends of the exhaust pipe 133. Here, the gas pipe may be implemented in the form of a manifold having a plurality of intake ports and a single exhaust port.

**In** addition, the battery module of the present disclosure may be configured to further include various devices (not shown) for controlling charge/discharge of the pouch-type secondary batteries 100, for example, a battery management system (BMS), a current sensor, a fuse, and the like, and a module housing for accommodating the pouch-type secondary batteries 100 and the various devices.

Meanwhile, the terms indicating directions as used herein such as upper, lower, left, right, front, and rear are used for convenience of description only, and it is obvious to those skilled in the art that the terms may change depending on the position of the stated element or an observer.

## Claims

1. A gas venting induction block (130) comprising:
a block body (131) having a slit (S) to allow the cell terrace (121) of a pouch-type secondary battery (100) to be inserted to a predetermined depth;
a pocket portion (132) provided inside the block body (131) and provided to accommodate a portion of the cell terrace (121) in a form in which a space is expanded larger than the slit (S); and
an exhaust pipe (133) provided in a tubular shape and extending from the pocket portion (132) to the outer surface of the block body (131),
wherein the exhaust pipe (133) comprises a needle portion (134) protruding sharply toward the inner space of the pocket portion (132) so as to perforate the cell terrace (121) when the cell terrace (121) expands beyond a certain volume in the pocket portion (132).

2. The gas venting induction block (130) according to claim 1,
wherein the block body (131) comprises:
a block upper portion (131a) and a block lower portion (131b) spaced apart vertically with the slit (S) therebetween; and
a block front portion (131c) having no slit (S) and connected to the block upper portion (131a) and the block lower portion (131b).

3. The gas venting induction block (130) according to claim 2,
wherein the block upper portion (131a) and the block lower portion (131b) are vertically symmetrical, and the thickness of the middle region is configured to be thinner than the thickness of both edge regions so that the pocket portion (132) is provided.

4. The gas venting induction block (130) according to claim 2,
wherein one end of the exhaust pipe (133) corresponding to the needle portion (134) is located in the pocket portion (132) and the other end of the exhaust pipe (133) is exposed to the outside of the block front portion (131c) via the inside of the block front portion (131c).

5. The gas venting induction block (130) according to claim 4,
wherein the exhaust pipe (133) is plural and comprises:
an upper exhaust pipe (133a) having the needle portion (134) protruding from the block upper portion (131a) toward the pocket portion (132); and
a lower exhaust pipe (133b) having the needle portion (134) protruding from the block lower portion (131a) toward the pocket portion (132).

6. The gas venting induction block (130) according to claim 2,
which comprises a cell lead outlet having a size corresponding to the width and thickness of the electrode lead (111) of the pouch-type secondary battery (100) and provided to penetrate the block front portion (131c) to communicate with the pocket portion (132).

7. The gas venting induction block (130) according to claim 1,
which comprises two foam members (135,136) disposed in the pocket portion (132) and spaced apart vertically with the slit (S) therebetween.

8. The gas venting induction block (130) according to claim 7,
wherein the needle portion (134) is configured to be positioned within the foam member (135,136).

9. A pouch-type secondary battery (100) comprising the gas venting induction block (130) according to any one of claims 1 to 8.

10. A battery module comprising the pouch-type secondary batteries (100) according to claim 9.

## Patentansprüche

1. Gasentlüftungsführungsblock (130), umfassend:
einen Blockkörper (131), welcher einen Schlitz (S) aufweist, um zu ermöglichen, dass die Zellterrasse (121) einer Beuteltyp-Sekundärbatterie (100) bis zu einer vorbestimmten Tiefe eingesetzt ist;
einen Taschenabschnitt (132), welcher innerhalb des Blockkörpers (131) bereitgestellt ist und derart bereitgestellt ist, dass er einen Abschnitt der Zellterrasse (121) in einer Form aufnimmt, in welchem ein Raum ausgedehnt ist, welcher größer als der Schlitz (S) ist; und
ein Abgasrohr (133), welches in einer rohrförmigen Form bereitgestellt ist und sich von dem Taschenabschnitt (132) zu der äußeren Fläche des Blockkörpers (131) erstreckt,
wobei das Abgasrohr (133) einen Nadelabschnitt (134) umfasst, welcher scharf in Richtung des inneren Raums des Taschenabschnitts (132) bereitgestellt ist, um die Zellterrasse (121) zu perforieren, wenn die Zellterrasse (121) über ein bestimmtes Volumen in dem Taschenabschnitt (132) hinaus ausgedehnt ist.

2. Gasentlüftungsführungsblock (130) nach Anspruch 1,
wobei der Blockkörper (131) umfasst:
einen oberen Blockabschnitt (131a) und einen unteren Blockabschnitt (131b), welche mit dem Schlitz (S) dazwischen vertikal beabstandet sind, und
einen vorderen Blockabschnitt (131c), welcher keinen Schlitz (S) aufweist und mit dem oberen Blockabschnitt (131a) und dem unteren Blockabschnitt (131b) verbunden ist.

3. Gasentlüftungsführungsblock (130) nach Anspruch 2,
wobei der obere Blockabschnitt (131a) und der untere Blockabschnitt (131b) vertikal symmetrisch sind und die Dicke des Mittelbereichs derart eingerichtet ist, dass sie dünner als die Dicke beider Randbereiche ist, so dass der Taschenabschnitt (132) bereitgestellt ist.

4. Gasentlüftungsführungsblock (130) nach Anspruch 2,
wobei ein Ende des Abgasrohrs (133), welches dem Nadelabschnitt (134) entspricht, in dem Taschenabschnitt (132) angeordnet ist, und das andere Ende des Abgasrohrs (133) über das Innere des vorderen Blockabschnitts (131c) zu dem Äußeren des vorderen Blockabschnitts (131c) freigelegt ist.

5. Gasentlüftungsführungsblock (130) nach Anspruch 4,
wobei das Abgasrohr (133) in einer Mehrzahl vorhanden ist und umfasst:
ein oberes Abgasrohr (133a), bei welchem der Nadelabschnitt (134) von dem oberen Blockabschnitt (131a) in Richtung des Taschenabschnitts (132) vorsteht; und
ein unteres Abgasrohr (133b), bei welchem der Nadelabschnitt (134) von dem unteren Blockabschnitt (131a) in Richtung des Taschenabschnitts (132) vorsteht.

6. Gasentlüftungsführungsblock (130) nach Anspruch 2,
welcher einen Zelllastauslass umfasst, der eine Größe aufweist, welche der Breite und der Dicke der Elektrodenleitung (111) der Beuteltyp-Sekundärbatterie (100) entspricht und derart bereitgestellt ist, dass er den vorderen Blockabschnitt (131c) penetriert, um mit dem Taschenabschnitt (132) in Verbindung zu stehen.

7. Gasentlüftungsführungsblock (130) nach Anspruch 1,
welcher zwei Schaumelemente (135, 136) umfasst, welche in dem Taschenabschnitt (132) angeordnet sind und mit dem Schlitz (S) dazwischen vertikal beabstandet sind.

8. Gasentlüftungsführungsblock (130) nach Anspruch 7,
wobei der Nadelabschnitt (134) dazu eingerichtet ist, innerhalb des Schaumelements (135, 136) positioniert zu sein.

9. Beuteltyp-Sekundärbatterie (100), umfassend den Gasentlüftungsführungsblock (130) nach einem der Ansprüche 1 bis 8.

10. Batteriemodul, umfassend die Beuteltyp-Sekundärbatterien (100) nach Anspruch 9.

## Revendications

1. Bloc d'induction d'évacuation de gaz (130) comprenant :
un corps de bloc (131) présentant une fente (S) pour permettre l'insertion de la terrasse de cellule (121) d'une batterie secondaire de type poche (100) à une profondeur prédéterminée ;
une partie poche (132) disposée à l'intérieur du corps de bloc (131) et prévue pour accueillir une partie de la terrasse de cellule (121) sous une forme dans laquelle un espace est élargi de façon à être plus grand que la fente (S) ; et
un tuyau d'échappement (133) fourni sous une forme tubulaire et s'étendant de la partie poche (132) à la surface extérieure du corps de bloc (131),
dans lequel le tuyau d'échappement (133) comprend une partie aiguille (134) faisant saillie fortement vers l'espace intérieur de la partie poche (132) de façon à perforer la terrasse de cellule (121) lorsque la terrasse de cellule (121) s'élargit au-delà d'un certain volume dans la partie poche (132).

2. Bloc d'induction d'évacuation de gaz (130) selon la revendication 1,
dans lequel le corps de bloc (131) comprend :
une partie supérieure de bloc (131a) et une partie inférieure de bloc (131b) espacées verticalement avec la fente (S) entre elles ; et
une partie avant de bloc (131c) ne présentant pas de fente (S) et reliée à la partie supérieure de bloc (131a) et à la partie inférieure de bloc (131b).

3. Bloc d'induction d'évacuation de gaz (130) selon la revendication 2,
dans lequel la partie supérieure de bloc (131a) et la partie inférieure de bloc (131b) sont symétriques verticalement, et l'épaisseur de la région centrale est configurée pour être plus fine que l'épaisseur des deux régions de bord de façon à fournir la partie poche (132).

4. Bloc d'induction d'évacuation de gaz (130) selon la revendication 2,
dans lequel une extrémité du tuyau d'échappement (133) correspondant à la partie aiguille (134) est située dans la partie poche (132) et l'autre extrémité du tuyau d'échappement (133) est exposée à l'extérieur de la partie avant de bloc (131c) via l'intérieur de la partie avant de bloc (131c).

5. Bloc d'induction d'évacuation de gaz (130) selon la revendication 4,
dans lequel le tuyau d'échappement (133) est fourni en une pluralité et comprend :
un tuyau d'échappement supérieur (133a) ayant la partie aiguille (134) faisant saillie à partir de la partie supérieure de bloc (131a) vers la partie poche (132) ; et
un tuyau d'échappement inférieur (133b) ayant la partie aiguille (134) faisant saillie à partir de la partie inférieure de bloc (131a) vers la partie poche (132).

6. Bloc d'induction d'évacuation de gaz (130) selon la revendication 2,
qui comprend une sortie de fil de cellule ayant une taille correspondant à la largeur et à l'épaisseur du fil d'électrode (111) de la batterie secondaire de type poche (100) et prévue pour pénétrer la partie avant de bloc (131c) pour communiquer avec la partie poche (132).

7. Bloc d'induction d'évacuation de gaz (130) selon la revendication 1,
qui comprend deux organes en mousse (135, 136) disposés dans la partie poche (132) et espacés verticalement avec la fente (S) entre eux.

8. Bloc d'induction d'évacuation de gaz (130) selon la revendication 7,
dans lequel la partie aiguille (134) est configurée pour être positionnée à l'intérieur de l'organe en mousse (135, 136).

9. Batterie secondaire de type poche (100) comprenant le bloc d'induction d'évacuation de gaz (130) selon l'une quelconque des revendications 1 à 8.

10. Module de batterie comprenant les batteries secondaires de type poche (100) selon la revendication 9.
